# EUROPEAN PATENT SPECIFICATION

(11) **EP 3 617 525 B1**
(45) Date of publication and mention of the grant of the patent: **16.07.2025**
(21) Application number: 17907027.1
(22) Date of filing: 25.12.2017
(51) Int. Cl.: F04D 29/26, F24F 1/00, F04D 17/04, H02K 49/10, F04D 29/62, F04D 29/66, F04D 25/02, F04D 29/056

(54) **IMPELLER ASSEMBLY, AND AIR CONDITIONER FOR SAME**
IMPELLERANORDNUNG UND KLIMAANLAGE DAFÜR
ENSEMBLE ROUE ET CLIMATISEUR POUR CELUI-CI

(30) Priority: 26.04.2017 CN 201710282787
(43) Date of publication of application: 04.03.2020
(73) Proprietor: Gree Electric Appliances (Wuhan) Co., Ltd., Hubei 430056 (CN); Gree Electric Appliances, Inc. of Zhuhai, Zhuhai, Guangdong 519070 (CN)
(72) Inventor: XIA, Guanghui, Zhuhai City Guangdong 519070 (CN); HAN, Peng, Zhuhai City Guangdong 519070 (CN); WANG, Chunjie, Zhuhai City Guangdong 519070 (CN)
(74) Representative: Zacco GmbH
(86) International application number: PCT/CN2017/118318
(87) International publication number: WO 2018/196416

(56) References cited:
- WO-A1-2015/136022
- CN-U- 202 792 451
- CN-U- 204 458 475
- CN-U- 206 889 340
- CN-Y- 2 186 319
- CN-Y- 2 823 621
- JP-A- H10 141 693
- KR-A- 20010 098 247
- US-A1- 2005 140 233
- US-A1- 2007 140 831
- US-B2- 8 523 444

## Description

### Technical Field

The present invention relates to an impeller assembly and an air conditioner thereof, which relates to the technical field of air conditioning.

### Background

The air conditioner is a commonly used household appliance, and a conventional air conditioner, in which an air duct and a water duct system and a bottom case are taken as a whole, and the air conditioner is firstly assembled and fixed as a base part, and if washing is required, a professional is required to disassemble and clean each part of the air conditioner, which is very inconvenient.

However, during the long-term use of the air conditioner, foreign matter such as dust entering the air duct and the water duct from the air inlet makes the whole air duct and the water duct system contaminate seriously, and if the cleaning is not performed in time, the air conditioner will be harmed to the environment during the operation of the air conditioner, thus harming the health of the user.

For the convenience of unpick and wash, the patent No. CN205037533U discloses a housing of an indoor unit of an air conditioner and an indoor unit of an air conditioner having same, which comprises an upper chassis, a lower chassis and a guide assembly, in which a mask is detachably mounted on the upper chassis, and a heat exchanger is mounted on the upper chassis. The blower is detachably mounted on the lower chassis. In the prior art, the heat exchanger is a water passage, the impeller below the heat exchanger forms an air passage, the blower is fixedly connected to the impeller, and the rotation of the blower drives the impeller to rotate, and therefore, when the blower is detached in the prior art. The fan and the impeller need to be dismounted together and then the contaminants in the impeller are cleaned, and this dismounting mode needs to dismount and clean the motor assembly together with the air duct component, which has the following problems: During cleaning, the sewage water can easily enter the motor part connected to the impeller to damage the motor water inlet; Alternatively, when the user cleans, it is forgotten to turn off the power supply of the fan, which may cause a situation in which the user touches electricity.

In order to solve the above-mentioned technical problem, Chinese patent document CN202792451 U discloses a wall-mounted air-conditioner indoor cabinet that facilitates disassembly, which comprises a cabinet and a chassis that are mutually engaged, in which the chassis is of a split type, and when cleaning, the cabinet is first removed and the fixing screw between the upper chassis and the lower chassis is disassembled. Then, the lower frame is dismounted, the fixing screw between the impeller and the shaft of the impeller motor is dismounted, and the upper and lower reinforcing rings of the first side support frame are continuously dismounted, so that the impeller can be easily dismounted. However, in the prior art, disassembly of the impeller and the impeller motor is troublesome, the screw needs to be disassembled first, and the reinforcing ring can only disassemble the impeller connected to the impeller motor, that is, the disassembly of the impeller and the motor is complicated. On the other hand, when cleaning, the user needs to disconnect the connecting electric wire between the motor of the fan and the electric power supply, and reconnecting the electric power supply wire may cause poor connection. This is lightly influencing the use, and heavily may cause damage to the motor, and even a situation where the user stores electricity occurs.

In order to conveniently and independently dismantle the impeller, Chinese patent CN 102364119 A discloses a through-flow fan blade, in which metal support shafts are fixed at the center of circles of two annular intermediate disks on the outer side of the central section of the left and right ends of the fan blade. A magnetic ring matching the stator of the motor and concentric with the metal support shaft is disposed outside one of the annular middle disks, and the magnetic ring is integrally connected with the outer side surface of the annular center through injection molding, the magnetic ring is constituted by a rotating ring sleeve and a connecting ring that are integrally perpendicular to each other. However, such a through flow blade is only applicable to an air conditioner as disclosed in patent CN 103994562 A, and is not applicable to an air conditioner which is commonly taken out by opening a panel. This is because, when a common air conditioner for opening and dismounting the through-flow blades by opening the panel needs to clean the blades, the blades are first moved by a certain distance in the direction of the end shaft of the blades and then removed from the opening of the panel in the radial direction of the blades. If the prior art is applied to the air conditioner with which the panel can be turned on and off, one end of the through-flow air vane is connected to the motor, and the other end is rotatably provided on the bottom case; when the air vane is axially separated from the motor, the air vane is close to the motor end to be suspended, and before the air vane is removed from the air conditioner in the radial direction. The windmill is close to the motor without support points, so that the windmill is skewed and dropped, which may cause the windmill to be damaged, and it is also difficult to align the stator of the motor with the magnetic ring during reinstallation, which makes it inconvenient to install after washing.

US2005/014233 discloses an air blower apparatus. The air blower apparatus is capable of increasing the air blowing capability without an increase in size of an electronic motor, and having a high assembling ability. An electronic motor is an axial gap electronic motor in which a rotor and a stator of the electronic motor are arranged opposedly with a predetermined gap along the rotation axis direction of the rotor, and coaxially supports an air blowing fan on an attaching surface of the rotor opposite to the stator.

### Summary

The scope of the disclosure is defined by the claims.

The technical problem to be solved by the present invention lies in the problem that an impeller magnetic ring is suspended and connected to a motor in a related technology blower device, and an impeller is easily skewed and dropped during disassembly and assembly after the impeller is separated from the motor, thereby providing an impeller assembly for connecting the impeller and the motor.

Further, the air conditioner having the above-mentioned impeller assembly is provided.

An impeller assembly including: an impeller rotatably provided on a bottom case;
a magnetic coupling driver for driving the impeller to rotate, having a first magnetic coupling member and a second magnetic coupling member connected to the impeller, the first magnetic coupling member being movable in an axial direction of the impeller relative to the second magnetic coupling member;
a supporting structure at least provided on one end of the impeller close to the magnetic coupling driver and fixed on removable a supporting seat relative to the magnetic coupling driver.

Preferably, the impeller and the first magnetic coupling member are connected by a rotation shaft, and the rotation shaft is rotatably supported on the supporting structure.

Preferably, the supporting structure includes: a supporting shaft sleeve, in which an inner ring surface thereof is sleeved on an outer surface of the rotation shaft; and a rubber seat bracket fixedly connected to the supporting shaft sleeve, and the rubber seat bracket adapted to be fixedly mounted on the supporting seat.

Preferably, the supporting shaft sleeve includes at least two supporting arc structures, and at least two supporting arc structures of the at least two supporting arc structures are radially detachably composed of a supporting shaft sleeve having an inner annular ring; the rubber seat bracket is fixedly connected to a support arc sleeve of adjacent supporting seat.

Preferably, radial edges of two supporting arc structures of the at least two supporting arc structures respectively have butt joint portions; the butt joint portions are buckled with each other to form the supporting shaft sleeve.

Preferably, the rubber seat bracket is provided with a inserting portion cooperating with the supporting seat.

Preferably, the inserting portion includes: a limiting portion for defining a inserting depth of the supporting seat, and a guide part cooperating with a guide structure on a sidewall of the supporting seat.

Preferably, the first magnetic coupling member has a disk.

An end of the rotation shaft 30 close to the second magnetic coupling member has an elastic portion axially elastically deformable, the elastic portion being able to pass through a through hole provided in a center of the second magnetic coupling member by elastic deformation.

A diameter of the elastic portion before deformation is greater than a diameter of the through hole, and the diameter of the elastic portion after deformation is less than the diameter of the through hole.

A free end of the elastic portion has a guide part, and a diameter of the guide part before deformation is less than the through hole.

The second magnetic coupling member is a permanent magnet arranged with N poles and S poles alternately circumferentially.

The he first magnetic coupling member is integrally formed with the rotation shaft.

The disk extends vertically along its sidewall with an annular ring; an inner diameter of the annular ring is adapted for the second magnetic coupling member, the second magnetic coupling member inserts into the annular ring.

Preferably, a connecting hole fixedly connecting the rotation shaft is formed in a center of the disk; the impeller assembly further including a fastener which limits a rotation of the disk relative to the rotation shaft.

Preferably, the connecting hole and the rotation shaft are connected in a threaded manner.

Preferably, the impeller assembly includes a disc shaft arranged at a center of the disk extending along an axis of the disk, wherein one end of the disc shaft is connected to a central positioning hole of the second magnetic coupling member, and the other end of the disc shaft is coaxially connected to the rotation shaft without rotation.

Preferably, the disk is provided with a fan structure for facilitating heat dissipation.

Preferably, the first magnetic coupling member is integrally formed with the disc shaft and the rotation shaft.

Further, an air conditioner is provided, which includes a motor and the above-mentioned impeller assembly, and a second magnetic coupling member is provided on the motor.

The motor is an external rotor electric machine, and the second magnetic coupling member is fixedly connected to an outer rotor of the external rotor electric machine.

The present invention has the following advantages relative to the related technology:
1. An impeller assembly provided by the present invention, including: a magnetic coupling driver and a support structure. The magnetic coupling driver is configured to drive the impeller to rotate, and has a first magnetic coupling member and a second magnetic coupling member connected to the impeller, and the first magnetic coupling member is movable in an axial direction of a rotation shaft relative to the second magnetic coupling member. The support structure at least provided on one end of the impeller close to the magnetic coupling driver and fixed on a removable a supporting seat relative to the magnetic coupling driver. The second magnetic coupling member is provided on the external rotor electric machine, and when the impeller connected to the motor in the air conditioner needs to be disassembled, the first magnetic coupling member and the second magnetic coupling member are separated in an axial direction, and the supporting structure supports the impeller close to one end of the magnetic coupling driver, so that after the impeller moves in an axial direction away from the motor, one end of the impeller close to the magnetic coupling driver has a support point without a floating arrangement, thereby avoiding the problem of impeller skew and drop.
2. An impeller assembly provided by the present invention, the impeller and the first magnetic coupling member are connected by a rotation shaft, and the rotation shaft is rotatably supported on the supporting structure, so that the impeller does not interfere with the supporting structure during rotation, thereby avoiding friction between the impeller and the supporting structure and improving rotation efficiency.
3. An impeller assembly provided by the present invention, the supporting structure includes: a supporting shaft sleeve, in which an inner ring surface thereof is sleeved on an outer surface of the rotation shaft; and a rubber seat bracket fixedly connected to the supporting shaft sleeve, and the rubber seat bracket adapted to be fixedly mounted on the supporting seat, the supporting seat being a fixing member in the air conditioner, so as to reliably support the rotation shaft.
4. An impeller assembly provided by the present invention, wherein the supporting shaft sleeve includes at least two supporting arc structures, and at least two supporting arc structures of the at least two supporting arc structures are radially detachably composed of a supporting shaft sleeve (21) having an inner annular ring, and when the inner annular ring of the supporting shaft sleeve is not conveniently sleeved into a rotation shaft located between the impeller and the first magnetic coupling member,the supporting arc structure may be joined to form the supporting shaft sleeve to surround the outer surface of the rotation shaft. The rubber seat bracket is fixedly connected to a support arc sleeve of adjacent supporting seat, so that after the supporting arc structures is assembled, the rubber seat bracket is mounted on the supporting seat.
5. An impeller assembly provided by the present invention, radial edges of two supporting arc structures of the at least two supporting arc structures respectively have butt joint portions, and the butt joint portions are buckled with each other to form the supporting shaft sleeve having an inner annular surface, and the inner annular surface is configured to support an outer surface of the rotation shaft.
6. An impeller assembly provided by the present invention, wherein the rubber seat bracket is provided with a inserting portion cooperating with the supporting seat, that is, the rubber seat bracket is fixed to the supporting seat by means of quick inserting, so as to implement quick installation.
7. An impeller assembly provided by the present invention, the inserting portion including: a limiting portion for defining a inserting depth of the supporting seat, and a guide part cooperating with a guide structure on a sidewall of the supporting seat, the limiting portion restricts a inserting position of the rubber seat bracket, the guide part realizes inserting and guiding, and the stopping and guiding combine the stopping and installation of the rubber seat bracket to achieve precise assembly of the supporting structure.
8. An impeller assembly provided by the present invention, the first magnetic coupling member having a disk, and the disk extends vertically along its sidewall with an annular ring; an inner diameter of the annular ring is adapted for the second magnetic coupling member, the second magnetic coupling member inserts into the annular ring, so that the second magnetic coupling member and the first magnetic coupling member are coupled to each other to rotate the impeller.
9. An impeller assembly provided by the present invention, a connecting hole fixedly connecting the rotation shaft is formed in a center of the disk, so that the first magnetic coupling member is fixedly connected to the rotation shaft. The impeller assembly further includes a fastener that restricts rotation of the disk relative to the rotation shaft such that there is no relative rotation between the disk and the rotation shaft such that the rotation shaft rotates under driving of the second magnetic coupling member.
10. An impeller assembly provided by the present invention, wherein the connecting hole and the rotation shaft are connected in a threaded manner, and a fastener is threaded to the rotation shaft, and the first magnetic coupling member is press-fitted onto the rotation shaft; the first magnetic coupling member is prevented from rotating relative to the rotation shaft.
11. The impeller assembly provided by the present invention further includes a disc shaft provided on a center of the disk extending along an axis of the disk, and one end of the disc shaft is connected to a center positioning hole of the second magnetic coupling member, so that the first magnetic coupling member and the second magnetic coupling member achieve a positioning connection. The other end of the disc shaft is connected non-rotatably coaxially with the rotation shaft, so that the magnetic coupling driver can drive the impeller to rotate.
12. The present invention provides an impeller assembly, wherein the disk is provided with a fan structure for facilitating heat dissipation, so that the magnetic coupling driver and the electric appliance around the disk have a good heat dissipation effect and extend the life of the machine.
13. An impeller assembly provided by the present invention, wherein the first magnetic coupling member and the disc shaft and the rotation shaft are integrally formed to facilitate assembly and reduce the number of parts.
14. An air conditioner provided by the present invention includes the aforementioned impeller assembly and a motor, the motor having a second magnetic coupling member, thus having all the aforementioned advantages.

### Brief Description of the Drawings

To illustrate the technical solutions in the embodiments of the present invention or in a related technology more clearly, the following briefly introduces the accompanying drawings required for describing the embodiments or a related technology. Obviously, the accompanying drawings in the following description are some embodiments of the present invention. For a person of ordinary skill in the art, other drawings can be obtained from these drawings without creative efforts.
Fig. 1 is an embodiment of a mating structure for an impeller and a motor according to the present invention;
Fig. 2 is an exploded view of Fig. 1;
Fig. 3 is another embodiment of a mating structure for an impeller and a motor according to the present invention;
Fig. 4 is an exploded view of the components of Fig. 3;
Fig. 5 is an exploded view of another view of Fig. 3;
Fig. 6 is a structural schematic diagram of a magnetic coupling driver in a mating structure for an impeller and a motor according to the present invention;
Fig. 7 is a schematic diagram of a supporting structure in a mating structure for an impeller and a motor according to the present invention;
Fig. 8 is an impeller assembly having an elastic portion according to the present invention;
Fig. 9 is a schematic diagram of a specific structure of the second magnetic coupling member in Fig. 8.

Marking: 1. an impeller; 10, a magnetic coupling driver; 101, a first magnetic coupling member; 102, a second magnetic coupling member; 11, Disk; 110, through hole; 12, a annular ring; 13, a disc shaft; 14, connecting holes; 15, fasteners; 20, supporting structure; 21, the supporting shaft sleeve; 22, an rubber seat bracket; 221, inserting portion; 211, supporting an arc structure; 30: rotation shaft; 31, an elastic portionportion; 40, a motor; 41, a central positioning hole; 50, Fan structure; 100, bottom case; 200, supporting seat;.

### Detailed Description of the Embodiments

The technical solutions of the present invention will be clearly and completely described below with reference to the accompanying drawings, and obviously, the described embodiments are a part of the embodiments of the present invention rather than all of the embodiments. Based on the embodiments of the present invention, all other embodiments obtained by those skilled in the art without creative efforts fall within the scope of protection of the present invention

Moreover, the technical features involved in different embodiments of the present invention described below can be combined with each other as long as no conflict is constituted between each other.

### Embodiment 1

An impeller assembly provided by this embodiment includes: an impeller 1, a magnetic coupling driver 10 and a supporting structure 20, in which the impeller 1 is rotatably provided on a bottom case 100; the magnetic coupling driver 10 drives the impeller 1 to rotate, and the magnetic coupling driver 10 has a first magnetic coupling member 101 and a second magnetic coupling member 102 connected to the impeller 1, and the first magnetic coupling member 101 can move in an axial direction of the rotation shaft 30 relative to the second magnetic coupling member 102; The supporting structure 20 at least provided on one end of the impeller 1 close to the magnetic coupling driver 10 and is fixed on a removable a supporting seat 200 relative to the magnetic coupling driver 10.

The second magnetic coupling member 102 is arranged on the external rotor electric machine 40, and when the impeller 1 transmitted and connected to the motor 40 in the air conditioner needs to be disassembled, the first magnetic coupling member 101 and the second magnetic coupling member 102 are axially separated, and the supporting structure 20 supports one end of the impeller 1 close to the magnetic coupling driver 10; After the impeller 1 is moved axially away from the motor 40, one end of the impeller 1 close to the magnetic coupling driver 10 has a supporting point without suspending the impeller 1, thereby avoiding the problem of skew and drop of the impeller 1. The motor 40 can be replaced with other drivers, and the impeller 1 can also be quickly separated from other drivers by using the impeller assembly of the present embodiment to dismount the impeller 1.

In this embodiment, one end of the impeller 1 away from the magnetic coupling driver 10 may be directly connected to the bottom case 100 of the air conditioner, or may be connected to the bottom case 100 of the air conditioner through the supporting structure 20.

The impeller 1 and the first magnetic coupling member 101 are connected via a rotation shaft 30, and the rotation shaft 30 is rotatably supported on the supporting structure 20, so that the impeller 1 does not interfere with the supporting structure 20 during rotation, thereby avoiding friction between the impeller 1 and the supporting structure 20 and improving rotation efficiency.

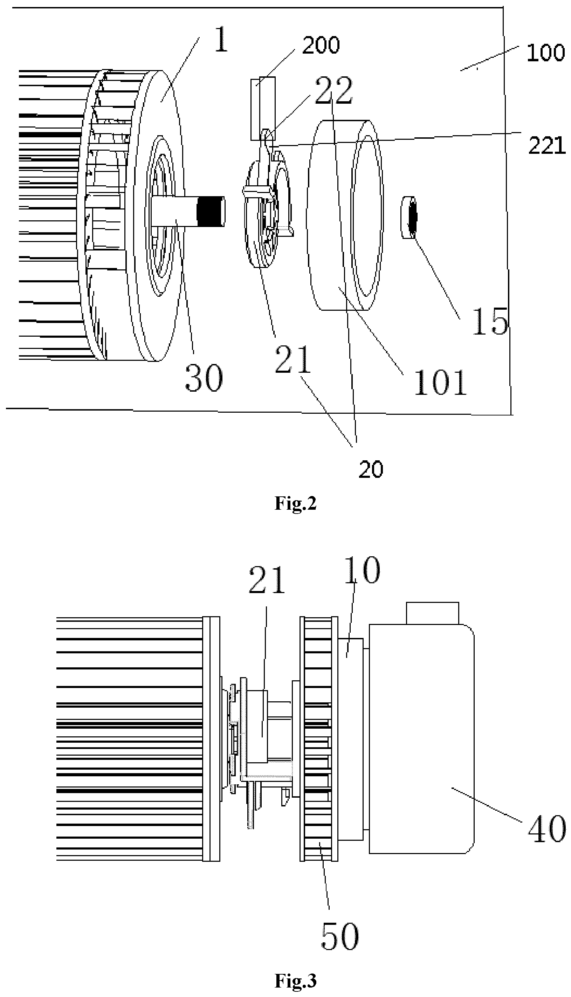

As shown in Figs. 2 and 3, the supporting structure 20 includes: a supporting shaft sleeve 21, an inner annular surface of which is sheathed on an outer surface of the rotation shaft 30, and the rotation shaft 30 rotates in an inner annular surface thereof; and a rubber seat bracket 22 fixedly connected to the supporting shaft sleeve 21 and adapted to be fixedly mounted on the supporting seat 200, the supporting seat 200 being a fixing member in the air conditioner, so as to reliably support the rotation shaft 30. The inner ring surface of the supporting shaft sleeve 21 is made of a free lubricating material.

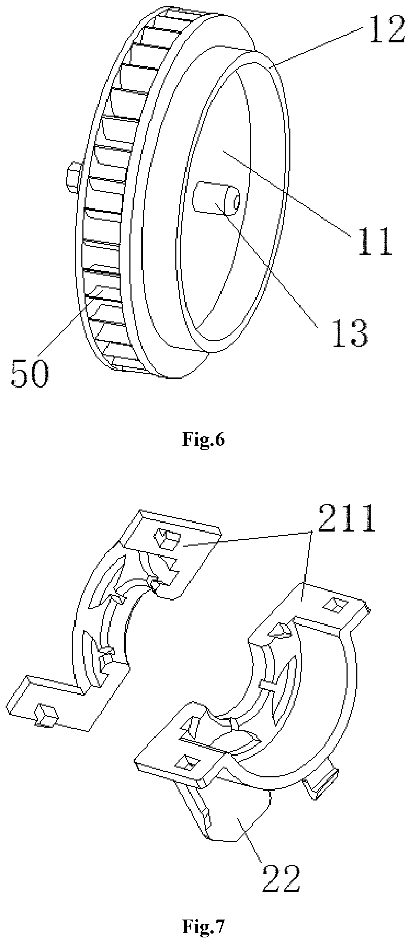

As shown in Fig. 7, the supporting shaft sleeve 21 includes two supporting arc structures 211, and the two supporting arc structures 211 detachably form the supporting shaft sleeve 21 with an inner annular ring in a radial direction. When the inner annular ring of the supporting shaft sleeve 21 is not directly sheathed into the rotation shaft 30 between the impeller 1 and the first magnetic coupling member 101, the supporting arc structures 211 may be joined to form the supporting shaft sleeve 21 to surround the outer surface of the rotation shaft 30. The rubber seat bracket 22 is fixedly connected to the supporting arc structures 211 adjacent to the supporting seat 200; so that the rubber seat bracket 22 is mounted on the supporting seat 200 after the supporting arc structures 211 is spliced. The supporting shaft sleeve 21 may be constituted by three or more supporting arc structures 211.

In the present embodiment, the two radial edges of the supporting arc structure 211 respectively have an butt joint portion, and the butt joint portion is buckled to each other to form the supporting shaft sleeve 21 having an inner annular surface, and the inner annular surface is buckled to the outer surface of the rotation shaft 30.

As shown in Fig. 7, the rubber seat bracket 22 is provided with a inserting portion 221 cooperating with the supporting seat 200, that is, the rubber seat bracket 22 is fixed to the supporting seat 200 by means of quick connecting, so as to implement quick mounting.

In the present embodiment, the inserting portion 221 includes: a limiting portion for defining a inserting depth of the supporting seat 200, and a guide part mating with a guide structure on the supporting seat 200, The limiting part limits the inserting position of the rubber seat bracket 22, and the guide part implements the insertion and guidance, and the limiting and guidance combine to accurately position and mount the rubber seat bracket 22, thereby achieving precise assembly of the supporting structure 20.

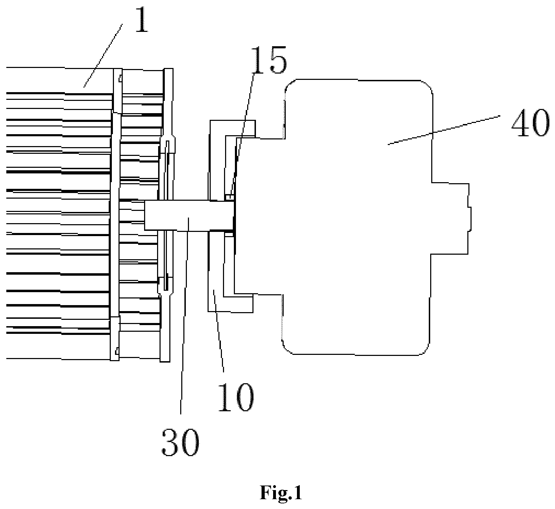

As shown in Figs. 1 and 2, the first magnetic coupling member 101 has a disk 11 and an annular ring 12 extending perpendicularly along a sidewall of the disk 11; The inner diameter of the annular ring 12 is suitable for the second magnetic coupling member 102 to penetrate into the annular ring 12, so that the second magnetic coupling member 102 and the first magnetic coupling member 101 are coupled to each other to rotate the impeller 1.

A connecting hole 14 fixedly connecting the rotation shaft 30 is formed in the center of the disk 11, so that the first magnetic coupling member 101 is fixedly connected to the rotation shaft 30. The impeller assembly further includes a fastener 15 that limits the rotation of the disk 11 relative to the rotation shaft 30 such that there is no relative rotation between the disk 11 and the rotation shaft 30 such that the rotation shaft 30 rotates under the driving of the second magnetic coupling member 102.

As shown in Figs. 1 and 2, the connecting hole 14 and the rotation shaft 30 are threadedly connected to each other, and the fastener 15 is threadedly connected to the rotation shaft 30 and press-fit the first magnetic coupling member 101 on the rotation shaft 30 to prevent the first magnetic coupling member 101 from rotating relative to the rotation shaft 30. The fastener 15 is a nut or a self-locking nut.

The disk 11 is provided with a fan structure 50 for facilitating heat dissipation, and the magnetic coupling driver 10 and the electric appliance around the disk 11 have a good heat dissipation effect and extend the life of the machine.

The first magnetic coupling member 101 is formed integrally with the end of the impeller 1 by an injection molding member having a magnetic material, and this structure is magnetically arranged in both the axial direction and the radial direction of the impeller 1. The second magnetic coupling member 102 is adsorbed and fixed to the first coupling member by an adsorbable material. The magnetic field is generated by energization in the motor and cooperates with the magnetic field charged in the first coupling member to rotate the impeller.

### Embodiment 2

An impeller assembly provided by this embodiment differs from Embodiment 1 in that: As shown in Fig. 6, a connecting hole 14 is not formed in the center of the disk 11, but a disc shaft 13 extending along an axis in the center of the disk 11. As shown in Figs. 3, 4 and 5, one end of the disc shaft 13 is connected to the central positioning hole 41 of the second magnetic coupling member 102, so that the first magnetic coupling member 101 and the second magnetic coupling member 102 are positioned and connected, and the other end is connected coaxially without rotation with the rotation shaft 30, so that the magnetic coupling driver 10 can drive the impeller 1 to rotate.

The disc shaft 13 is non-rotatably connected to the rotation shaft 30 by a fastener 15 such as a screw.

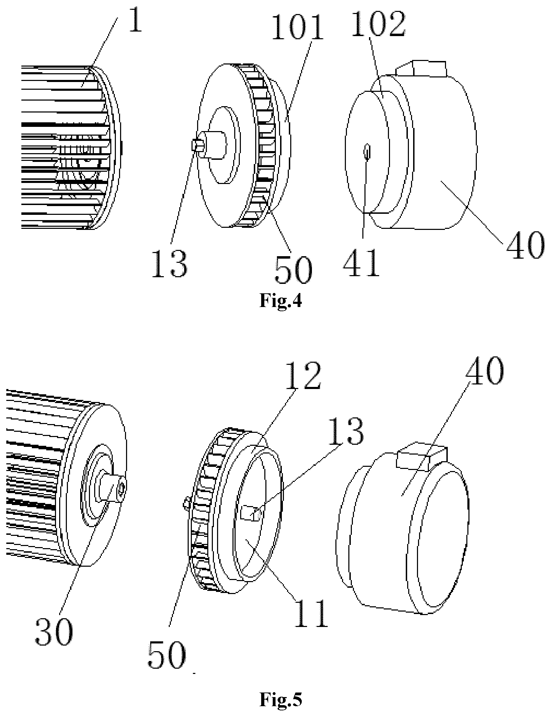

As a variant, the rotation shaft 30 is jointly connected to an end portion adjacent to the disc shaft 13. As shown in Figs. 4 and 5, an inner hexagonal structure is provided at an end portion of the rotation shaft 30, an outer hexagonal structure is provided at an end portion of the disc shaft 13, and the outer hexagonal structure on the bypass shaft is inserted into the inner hexagonal structure of the rotation shaft 30, so the two are not rotatably jointly connected.

### Embodiment 3

An impeller assembly provided by this embodiment differs from Embodiment 2 in that: The first magnetic coupling member 101 and the disc shaft 13, and the rotation shaft 30 are integrally formed to facilitate assembly and reduce the number of parts.

In this embodiment, as shown in Fig. 7, the supporting shaft sleeve 21 includes two supporting arc structures 211, and the two supporting arc structures 211 detachably form the supporting shaft sleeve 21 having an inner annular ring in a radial direction. The two supporting arc structures 211 are centered on the rotation shaft 30 in the circumferential direction of the rotation shaft 30 and joined to form a complete supporting shaft sleeve 21 to surround the outer surface of the rotation shaft 30.

### Embodiment 4

An air conditioner provided in this embodiment includes an impeller 1 and a motor 40. The motor 40 has a second magnetic coupling member 102. The air conditioner has the impeller assembly described in Embodiment 1 or Embodiment 2 or Embodiment 3. The supporting seat 200 is fixed to the bottom case 100 of the air conditioner, and the supporting seat 200 is fixedly connected to the supporting structure 20 for supporting the rotation shaft.

### Embodiment 5

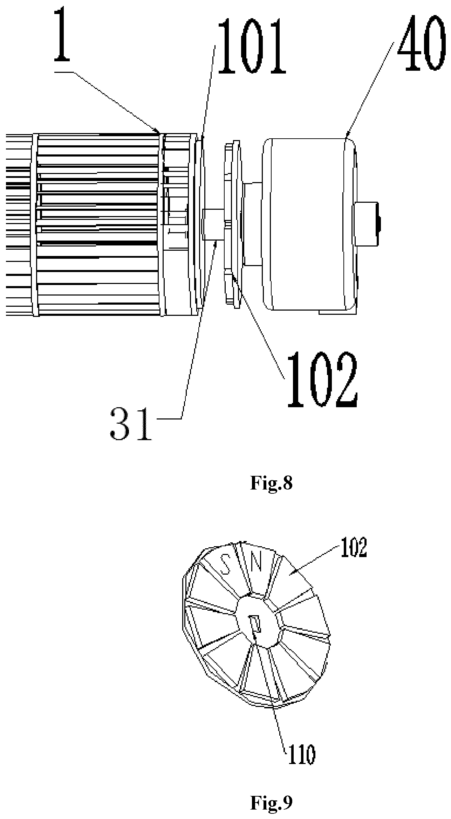

An air conditioner provided by this embodiment includes an impeller 1 and a motor 40, where the impeller 1 is rotatably provided on a bottom case 100; The magnetic coupling driver 10 includes a first magnetic coupling member 101 and a second magnetic coupling member 102, and a support structure is provided on one end of the impeller 1 close to the first magnetic coupling member 101 and is fixed on a support detachable from the first magnetic coupling member 101, as shown in Fig. 8. The first magnetic coupling member 101 is a copper disk, and is arranged on an end portion of the impeller 1, and the second magnetic coupling member 102 is a permanent magnet arranged with N poles and S poles alternately and circumferentially, as shown in Fig. 9, the permanent magnet is arranged on an outer rotor of an external rotor electric machine, and the motor rotates to drive the second magnetic coupling member 102 rotation,the permanent magnet occurs relate movement with the copper disk, the two maintain a certain rotational speed difference, the copper disk cuts the magnetic induction line, and an induction vortex of a corresponding pole number is generated on the copper disk, and the induction vortex generates a corresponding induction magnetic field. The induced magnetic field generated by the turbulence and the magnetic field generated by the permanent magnet are coupled by a magnetic field so that there is an interaction between the two, thereby driving the impeller 1 to rotate.

The impeller 1 is connected to the first magnetic coupling member 101 via a rotation shaft 30, the first magnetic coupling member 101 is integrally formed with the rotation shaft 30, and the rotation shaft 30 is rotatably supported on the supporting structure 20. One end of the rotation shaft 30 close to the second magnetic coupling member 102 has an axially elastically deformable elastic portion 31 adapted to pass through the through hole 110 disposed in the center of the second magnetic coupling member 102 by elastic deformation. The diameter of the elastic portion 31 is greater than the diameter of the through hole 110 before deformation and less than the diameter of the through hole 110 after deformation. The free end of the elastic portion 31 has a guiding part, and the diameter of the guiding part before being undeformed is smaller than that of the through hole 110, that is, when installed, after the guiding part first passes through the through hole 110, the guiding part is pulled through the guiding part of the part, so that the elastic portion 31 is elastically deformed under the action of pulling force. The diameter is reduced to be greater than the diameter of the through hole 110 and then passes through the through hole 110 to function as a supporting and limiting impeller. During dismounting, when the impeller or the entire air duct system is pulled outward, the elastic portion of the rotation shaft is deformed by the force, so that the elastic portion is disengaged from the through hole, and the impeller or the entire air duct system can be pulled out.

The impeller or the entire air duct system is conveniently disassembled by the engagement of the elastic portion 31 with the through hole 110, and the dismantling process does not need to dial the impeller to one side so as to separate the impeller from the motor.

## Claims

1. An impeller assembly, comprising:
an impeller (1) rotatably provided on a bottom case (100);
a magnetic coupling driver (10) for driving the impeller (1) to rotate, having a first magnetic coupling member (101) and a second magnetic coupling member (102) connected to the impeller (1), the first magnetic coupling member (101) being movable in an axial direction of the impeller (1) relative to the second magnetic coupling member (102);
**characterized in that** the impeller assembly further comprises:
a supporting structure (20) at least provided on one end of the impeller (1) close to the magnetic coupling driver (10) and fixed on a supporting seat (200), the magnetic coupling driver (10) is detachable relative to the supporting seat (200), the impeller (1) and the first magnetic coupling member (101) are connected by a rotation shaft (30), and the rotation shaft (30) is rotated relative to the supporting structure (20), the supporting structure (20) comprises: a supporting shaft sleeve (21), in which an inner ring surface thereof is sleeved on an outer surface of the rotation shaft (30); and a rubber seat bracket (22) fixedly connected to the supporting shaft sleeve (21), and the rubber seat bracket (22) adapted to be fixedly mounted on the supporting seat (200), the first magnetic coupling member (101) is integrally formed or fastened to the rotation shaft (30), the supporting seat (200) is configured to be fixed on the bottom case (100).

2. The impeller assembly as claimed in claim 1, wherein the supporting shaft sleeve (21) comprises at least two supporting arc structures (211), and at least two supporting arc structures (211) of the at least two supporting arc structures (211) are radially detachably composed of a supporting shaft sleeve (21) having an inner annular ring; the rubber seat bracket (22) is fixedly connected to a support arc sleeve of adjacent supporting seat (200).

3. The impeller assembly as claimed in claim 2, wherein radial edges of two supporting arc structures (211) of the at least two supporting arc structures (211) respectively have butt joint portions; the butt joint portions are buckled with each other to form the supporting shaft sleeve (21).

4. The impeller assembly as claimed in claim 1 or 2 or 3, wherein the rubber seat bracket (22) is provided with a inserting portion (221) cooperating with the supporting seat (200).

5. The impeller assembly as claimed in claim 4, wherein the inserting portion (221) comprises: a limiting portion for defining a inserting depth of the supporting seat (200), and a guide part cooperating with a guide structure on a sidewall of the supporting seat (200).

6. The impeller assembly as claimed in any one of claims 1 to 5, wherein the first magnetic coupling member (101) has a disk (11).

7. The impeller assembly as claimed in any one of claims 1 to 6, wherein an end of the rotation shaft (30) close to the second magnetic coupling member (102) has an elastic portion (31) axially elastically deformable, the elastic portion (31) being able to pass through a through hole (110) provided in a center of the second magnetic coupling member (102) by elastic deformation.

8. The impeller assembly as claimed in claim 7, wherein a diameter of the elastic portion (31) before deformation is greater than a diameter of the through hole (110), and the diameter of the elastic portion (31) after deformation is less than the diameter of the through hole (110).

9. The impeller assembly as claimed in claim 7, wherein a free end of the elastic portion (31) has a guide part, and a diameter of the guide part before deformation is less than the through hole (110).

10. The impeller assembly as claimed in claim 7, wherein the second magnetic coupling member (102) is a permanent magnet arranged with N poles and S poles alternately circumferentially.

11. The impeller assembly as claimed in claim 6, wherein the disk (11) extends vertically along its sidewall with an annular ring (12); an inner diameter of the annular ring (12) is adapted for the second magnetic coupling member (102), the second magnetic coupling member (102) inserts into the annular ring (12).

12. The impeller assembly as claimed in claim 11, wherein a connecting hole (14) fixedly connecting the rotation shaft (30) is formed in a center of the disk (11); the impeller assembly further comprising a fastener (15) which limits a rotation of the disk (11) relative to the rotation shaft (30).

13. The impeller assembly as claimed in claim 12, wherein the connecting hole (14) and the rotation shaft (30) are connected in a threaded manner.

14. The impeller assembly as claimed in claim 11, further comprising a disc shaft (13) arranged at a center of the disk (11) extending along an axis of the disk (11), wherein one end of the disc shaft (13) is connected to a central positioning hole (41) of the second magnetic coupling member (102), and the other end of the disc shaft (13) is coaxially connected to the rotation shaft (30) without rotation.

15. The impeller assembly as claimed in claim 11, wherein the disk (11) is provided with a fan structure (50) for facilitating heat dissipation.

16. The impeller assembly as claimed in claim 14 or 15, wherein the first magnetic coupling member (101) is integrally formed with the disc shaft (13) and the rotation shaft (30).

17. An air conditioner, comprising: a motor (40) and the impeller assembly as claimed in any one of claims 1-16, wherein the motor (40) has the second magnetic coupling member (102).

18. The air conditioner as claimed in claim 17, wherein the motor (40) is an external rotor electric machine, and the second magnetic coupling member (102) is fixedly connected to an outer rotor of the external rotor electric machine.

## Patentansprüche

1. Flügelradanordnung, die umfasst:
ein Flügelrad (1), das an einem unteren Gehäuse (100) drehbar bereitgestellt ist;
ein Magnetverbindungsantriebselement (10) zum Drehantreiben des Flügelrads (1) mit einem ersten Magnetverbindungselement (101) und einem zweiten Magnetverbindungselement (102) in Verbindung mit dem Flügelrad (1), wobei das erste Magnetverbindungselement (101) in einer axialen Richtung des Flügelrads (1) relativ zum zweiten Magnetverbindungselement (102) beweglich ist;
**dadurch gekennzeichnet, dass** die Flügelradanordnung ferner umfasst:
eine Trägerstruktur (20), die zumindest an einem Ende des Flügelrads (1) in der Nähe des Magnetverbindungsantriebselements (10) vorgesehen und auf einem Trägersitz (200) fixiert ist, wobei das Magnetverbindungsantriebselement (10) relativ zu dem Trägersitz (200) abnehmbar, das Flügelrad (1) und das erste Magnetverbindungselement (101) durch eine Drehwelle (30) verbunden sind und die Drehwelle (30) relativ zu der Trägerstruktur (20) gedreht wird, wobei die Trägerstruktur (20) umfasst: eine Trägerwellenhülse (21), wobei eine Innenringfläche davon auf eine Außenfläche der Drehwelle (30) aufgeschoben ist; und eine Gummisitzhalterung (22), die fest mit der Trägerwellenhülse (21) verbunden ist, und wobei die Gummisitzhalterung (22) so ausgelegt ist, dass sie auf dem Trägersitz (200) fest montiert ist, das erste Magnetverbindungselement (101) integral mit der Drehwelle (30) ausgebildet oder an dieser befestigt ist, der Trägersitz (200) dazu konfiguriert ist, an dem unteren Gehäuse (100) fixiert zu werden.

2. Flügelradanordnung nach Anspruch 1, wobei die Trägerwellenhülse (21) zumindest zwei Trägerbogenstrukturen (211) umfasst und zumindest zwei Trägerbogenstrukturen (211) der zumindest zwei Trägerbogenstrukturen (211) radial lösbar aus einer Trägerwellenhülse (21) mit einem inneren kranzförmigen Ring bestehen; die Gummisitzhalterung (22) fest mit einer Trägerbogenhülse des benachbarten Trägersitzes (200) verbunden ist.

3. Flügelradanordnung nach Anspruch 2, wobei radiale Kanten von zwei Trägerbogenstrukturen (211) der zumindest zwei Trägerbogenstrukturen (211) jeweils hintere Verbindungsabschnitte aufweisen; die hinteren Verbindungsabschnitte miteinander verschnallt sind, um die Trägerwellenhülse (21) zu bilden.

4. Flügelradanordnung nach Anspruch 1 oder 2 oder 3, wobei die Gummisitzhalterung (22) mit einem mit dem Trägersitz (200) zusammenwirkenden Einsetzabschnitt (221) versehen ist.

5. Flügelradanordnung nach Anspruch 4, wobei der Einsetzabschnitt (221) umfasst: einen Begrenzungsabschnitt zum Definieren einer Einsetztiefe des Trägersitzes (200) und ein Führungsteil, das mit einer Führungsstruktur an einer Seitenwand des Trägersitzes (200) zusammenwirkt.

6. Flügelradanordnung nach einem der Ansprüche 1 bis 5, wobei das erste Magnetverbindungselement (101) eine Scheibe (11) aufweist.

7. Flügelradanordnung nach einem der Ansprüche 1 bis 6, wobei ein Ende der Drehwelle (30) in der Nähe des zweiten Magnetverbindungselements (102) einen elastischen Abschnitt (31) aufweist, der axial elastisch verformbar ist, wobei der elastische Abschnitt (31) durch elastische Verformung durch ein Durchgangsloch (110) in einer Mitte des zweiten Magnetverbindungselements (102) hindurchreichen kann.

8. Flügelradanordnung nach Anspruch 7, wobei ein Durchmesser des elastischen Abschnitts (31) vor der Verformung größer als ein Durchmesser des Durchgangslochs (110) ist und der Durchmesser des elastischen Abschnitts (31) nach der Verformung kleiner als der Durchmesser des Durchgangslochs (110) ist.

9. Flügelradanordnung nach Anspruch 7, wobei ein freies Ende des elastischen Abschnitts (31) ein Führungsteil aufweist und ein Durchmesser des Führungsteils vor der Verformung kleiner als das Durchgangsloch (110) ist.

10. Flügelradanordnung nach Anspruch 7, wobei das zweite Magnetverbindungselement (102) ein Permanentmagnet ist, der mit N-Polen und S-Polen abwechselnd umlaufend angeordnet ist.

11. Flügelradanordnung nach Anspruch 6, wobei sich die Scheibe (11) senkrecht entlang der Seitenwand davon mit einem kranzförmigen Ring (12) erstreckt; ein Innendurchmesser des kranzförmigen Rings (12) für das zweite Magnetverbindungselement (102) ausgelegt ist, das zweite Magnetverbindungselement (102) in den kranzförmigen Ring (12) eingesetzt ist.

12. Flügelradanordnung nach Anspruch 11, wobei ein Verbindungsloch (14), das die Drehwelle (30) fest verbindet, in einer Mitte der Scheibe (11) ausgebildet ist; wobei die Flügelradanordnung ferner ein Befestigungselement (15) umfasst, das eine Drehung der Scheibe (11) relativ zur Drehwelle (30) begrenzt.

13. Flügelradanordnung nach Anspruch 12, wobei das Verbindungsloch (14) und die Drehwelle (30) mittels Gewinde verbunden sind.

14. Flügelradanordnung nach Anspruch 11, die ferner eine Scheibenwelle (13) umfasst, die in einer Mitte der Scheibe (11) angeordnet ist, die sich entlang einer Achse der Scheibe (11) erstreckt, wobei ein Ende der Scheibenwelle (13) mit einem zentralen Positionierungsloch (41) des zweiten Magnetverbindungselements (102) verbunden ist und das andere Ende der Scheibenwelle (13) koaxial mit der Drehwelle (30) ohne Drehung verbunden ist.

15. Flügelradanordnung nach Anspruch 11, wobei die Scheibe (11) mit einer Lüfterstruktur (50) zur Erleichterung der Wärmeableitung versehen ist.

16. Flügelradanordnung nach Anspruch 14 oder 15, wobei das erste Magnetverbindungselement (101) integral mit der Scheibenwelle (13) und der Drehwelle (30) ausgebildet ist.

17. Klimaanlage, die umfasst: einen Motor (40) und die Flügelradanordnung nach einem der Ansprüche 1 bis 16, wobei der Motor (40) das zweite Magnetverbindungselement (102) aufweist.

18. Klimaanlage nach Anspruch 17, wobei der Motor (40) eine externe Rotorelektromaschine ist und das zweite Magnetverbindungselement (102) fest mit einem Außenrotor der externen Rotorelektromaschine verbunden ist.

## Revendications

1. Ensemble de roue, comprenant :
une roue (1) disposée de manière rotative sur un boîtier inférieur (100) ;
un entraînement à couplage magnétique (10) pour entraîner la roue (1) en rotation, ayant un premier élément de couplage magnétique (101) et un second élément de couplage magnétique (102) connectés à la roue (1), le premier élément de couplage magnétique (101) étant mobile dans une direction axiale de la roue (1) par rapport au second élément de couplage magnétique (102) ;
**caractérisé en ce que** l'ensemble de roue comprend en outre :
une structure de support (20) au moins prévue sur une extrémité de la roue (1) à proximité de l'entraîneur à couplage magnétique (10) et fixée sur un siège de support (200), l'entraîneur à couplage magnétique (10) est détachable par rapport au siège de support (200), la roue (1) et le premier élément de couplage magnétique (101) sont reliés par un arbre de rotation (30), et l'arbre de rotation (30) est tourné par rapport à la structure de support (20), la structure de support (20) comprend : un manchon d'arbre de support (21), dans lequel une surface annulaire intérieure de celui-ci est manchonnée sur une surface extérieure de l'arbre de rotation (30) ; et un support de siège en caoutchouc (22) relié de manière fixe au manchon d'arbre de support (21), et le support de siège en caoutchouc (22) adapté pour être monté de manière fixe sur le siège de support (200), le premier élément de couplage magnétique (101) est formé d'un seul tenant ou fixé à l'arbre de rotation (30), le siège de support (200) est configuré pour être fixé sur le boîtier inférieur (100).

2. Ensemble de roue selon la revendication 1, dans lequel le manchon d'arbre de support (21) comprend au moins deux structures d'arc de support (211), et au moins deux structures d'arc de support (211) des au moins deux structures d'arc de support (211) sont composées de manière radialement détachable d'un manchon d'arbre de support (21) ayant une bague annulaire intérieure ; le support de siège en caoutchouc (22) est relié de manière fixe à un manchon d'arc de support du siège de support adjacent (200).

3. Ensemble de roue selon la revendication 2, dans lequel les bords radiaux de deux structures d'arc de support (211) des au moins deux structures d'arc de support (211) ont respectivement des parties de joint bout à bout ; les parties de joint bout à bout sont bouclées l'une avec l'autre pour former le manchon d'arbre de support (21).

4. Ensemble de roue selon la revendication 1 ou 2 ou 3, dans lequel le support de siège en caoutchouc (22) est pourvu d'une partie d'insertion (221) coopérant avec le siège de support (200).

5. Ensemble de roue selon la revendication 4, dans lequel la partie d'insertion (221) comprend : une partie de limitation pour définir une profondeur d'insertion du siège de support (200), et une partie de guidage coopérant avec une structure de guidage sur une paroi latérale du siège de support (200).

6. Ensemble de roue selon l'une quelconque des revendications 1 à 5, dans lequel le premier élément de couplage magnétique (101) comporte un disque (11).

7. Ensemble de roue selon l'une quelconque des revendications 1 à 6, dans lequel une extrémité de l'arbre de rotation (30) proche du deuxième élément de couplage magnétique (102) comporte une partie élastique (31) déformable élastiquement axialement, la partie élastique (31) étant capable de passer à travers un trou traversant (110) prévu au centre du deuxième élément de couplage magnétique (102) par déformation élastique.

8. Ensemble de roue selon la revendication 7, dans lequel un diamètre de la partie élastique (31) avant déformation est supérieur à un diamètre du trou traversant (110), et le diamètre de la partie élastique (31) après déformation est inférieur au diamètre du trou traversant (110).

9. Ensemble de roue selon la revendication 7, dans lequel une extrémité libre de la partie élastique (31) comporte une partie de guidage, et un diamètre de la partie de guidage avant déformation est inférieur au trou traversant (110).

10. Ensemble de roue selon la revendication 7, dans lequel le deuxième élément de couplage magnétique (102) est un aimant permanent disposé avec des pôles N et des pôles S alternativement circonférentiellement.

11. Ensemble de roue selon la revendication 6, dans lequel le disque (11) s'étend verticalement le long de sa paroi latérale avec une bague annulaire (12) ; un diamètre intérieur de la bague annulaire (12) est adapté pour le deuxième élément de couplage magnétique (102), le deuxième élément de couplage magnétique (102) s'insère dans la bague annulaire (12).

12. Ensemble de roue selon la revendication 11, dans lequel un trou de connexion (14) reliant de manière fixe l'arbre de rotation (30) est formé au centre du disque (11) ; l'ensemble de roue comprenant en outre un élément de fixation (15) qui limite une rotation du disque (11) par rapport à l'arbre de rotation (30).

13. Ensemble de roue selon la revendication 12, dans lequel le trou de connexion (14) et l'arbre de rotation (30) sont connectés de manière filetée.

14. Ensemble de roue selon la revendication 11, comprenant en outre un arbre de disque (13) disposé au centre du disque (11) s'étendant le long d'un axe du disque (11), dans lequel une extrémité de l'arbre de disque (13) est reliée à un trou de positionnement central (41) du deuxième élément de couplage magnétique (102), et l'autre extrémité de l'arbre de disque (13) est reliée coaxialement à l'arbre de rotation (30) sans rotation.

15. Ensemble de roue selon la revendication 11, dans lequel le disque (11) est pourvu d'une structure de ventilateur (50) pour faciliter la dissipation de chaleur.

16. Ensemble de roue selon la revendication 14 ou 15, dans lequel le premier élément de couplage magnétique (101) est formé d'un seul tenant avec l'arbre de disque (13) et l'arbre de rotation (30).

17. Climatiseur, comprenant : un moteur (40) et l'ensemble de roue selon l'une quelconque des revendications 1 à 16, dans lequel le moteur (40) comporte le deuxième élément de couplage magnétique (102).

18. Climatiseur selon la revendication 17, dans lequel le moteur (40) est une machine électrique à rotor externe, et le deuxième élément de couplage magnétique (102) est relié de manière fixe à un rotor externe de la machine électrique à rotor externe.
